# FASCICULE DE BREVET EUROPEEN

(11) **EP 1 128 636 B1**
(45) Date de publication et mention de la délivrance du brevet: **27.06.2007**
(21) Numéro de dépôt: 01400370.1
(22) Date de dépôt: 13.02.2001
(51) Int. Cl.: H04L 29/12, H04L 12/28

(54) **Procédé pour constituer des répertoires dans des terminaux en réseau**
Verfahren zur Erzeugung von Adresstabellen in Netzterminals
Method for creating address tabels in network terminals

(30) Priorité: 24.02.2000 FR 0002485
(43) Date de publication de la demande: 29.08.2001
(73) Titulaire: SAGEM Communication, 75015 Paris (FR)
(72) Inventeur: Gavoille, Laurent, 95430 Auvers sur Oise (FR)
(74) Mandataire: Lapoux, Roland

(56) Documents cités:
- US-A- 5 978 568

## Description

La présente invention concerne d'une manière générale l'interconnexion de terminaux numériques, notamment de terminaux téléphoniques, à travers un réseau local LAN (Local Area Network). Plus particulièrement, l'invention a trait à la constitution automatique de répertoires d'appelés dans les terminaux lorsqu'un nouveau terminal est connecté au réseau, ou lorsque l'un des terminaux a changé d'adresse.

Dans un réseau local supportant au niveau des couches réseau et transport les protocoles internet TCP/IP (Transport Control Protocol/Internet Protocol), c'est-à-dire dans les réseaux de type intranet, chaque terminal est associé à une adresse IP comprenant par exemple une suite d'une série de quatre octets, telle que 143.14.18.178, et le cas échéant à un nom de réseau très peu évocateur du terminal PC63B912. Les usagers du terminal n'étant pas habitués à utiliser de telles désignations réservées aux spécialistes informatiques, il s'est avéré nécessaire de constituer manuellement dans chaque terminal, un répertoire avec des noms usuels des autres terminaux du réseau afin de les adresser facilement, de tels noms usuels étant par exemple imprimante X, station Y, télécopieur 3, etc. Ainsi dans chaque terminal, une fonction de traduction associée au répertoire du terminal fait correspondre le nom usuel de chaque terminal susceptible d'être appelé avec l'adresse IP ou le nom de réseau du terminal.

Comme cela est bien connu, lorsqu'un terminal donné est à ajouter dans un réseau local, il est nécessaire d'inscrire de manière fastidieuse tous les autres terminaux du réseau dans le répertoire du terminal donné, mais également de mettre à jour de manière fastidieuse les répertoires de tous les terminaux du réseau avec le terminal donné. Lorsque le réseau contient plusieurs dizaines ou centaines de terminaux, le chargement des adresses et des noms dans les terminaux lors de l'installation d'un terminal donné nécessite plusieurs heures de travail.

Le document US-5978568 divulgue un procédé de mis à jour automatique d'un serveur de répertoire pour un réseau local, selon lequel des agents situés dans le réseau communiquent au serveur de répertoire les noms et adresses des terminaux connectés. Par la suite, cette information peut être utilisée par des applications dans les terminaux.

L'objectif de la présente invention vise à remédier aux inconvénients ci-dessus, en offrant une constitution automatique du répertoire du nouveau terminal connecté à un réseau et une mise à jour automatique des répertoires dans les autres terminaux du réseau, ce qui évite avantageusement de faire appel à un spécialiste informatique pour répertorier un nouveau terminal dans un réseau local.

A cette fin, un procédé pour constituer des répertoires dans des terminaux reliés par un réseau local, est caractérisé en ce qu'il comprend les étapes suivantes :
- diffuser un message depuis un terminal donné dans le réseau, ledit message diffusé contenant au moins un nom et une adresse du terminal donné,
- dans au moins un autre terminal, décoder le message diffusé, y extraire le nom et l'adresse du terminal donné, introduire le nom et l'adresse extraits en correspondance dans un répertoire dudit autre terminal, et transmettre un message de réponse contenant l'adresse dudit terminal donné en tant qu'adresse de récepteur, et au moins le nom et l'adresse dudit autre terminal extraits du message diffusé,
- décoder le message de réponse dans le terminal donné, y extraire le nom et l'adresse dudit autre terminal, et introduire le nom et l'adresse extraits en correspondance dans un répertoire dudit terminal donné.

Lorsque le réseau comprend plusieurs types de terminaux, par exemple des télécopieurs et des micro-ordinateurs, le terminal donné et plusieurs autres terminaux dans le réseau définissent un groupe de terminaux associés à un identifiant. Le message diffusé comprend alors de préférence ledit identifiant afin que seulement lesdits plusieurs autres terminaux décodent le message diffusé pour y extraire le nom et l'adresse du terminal donné.
Le message diffusé et le message de réponse peuvent comprendre chacun un champ de fonction relatifs à la constitution de répertoire.
L'adresse contenue dans le message diffusé ou dans le message de réponse peut comprendre une adresse de terminal émetteur selon le protocole internet et/ou une adresse de courrier électronique de terminal émetteur.
L'étape de diffuser succède automatiquement à une connexion du terminal donné au réseau, qui peut être précédée par une première installation du terminal donné dans le réseau, ou par une déconnexion (mise hors tension) du terminal donné.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme schématique d'un réseau local avec quelques terminaux ;
- la figure 2 montre la structure d'un paquet d'identification au niveau protocole IP, selon l'invention ; et
- la figure 3 est un algorithme d'étapes du procédé de constitution de répertoires dans des terminaux du réseau local de la figure 1.

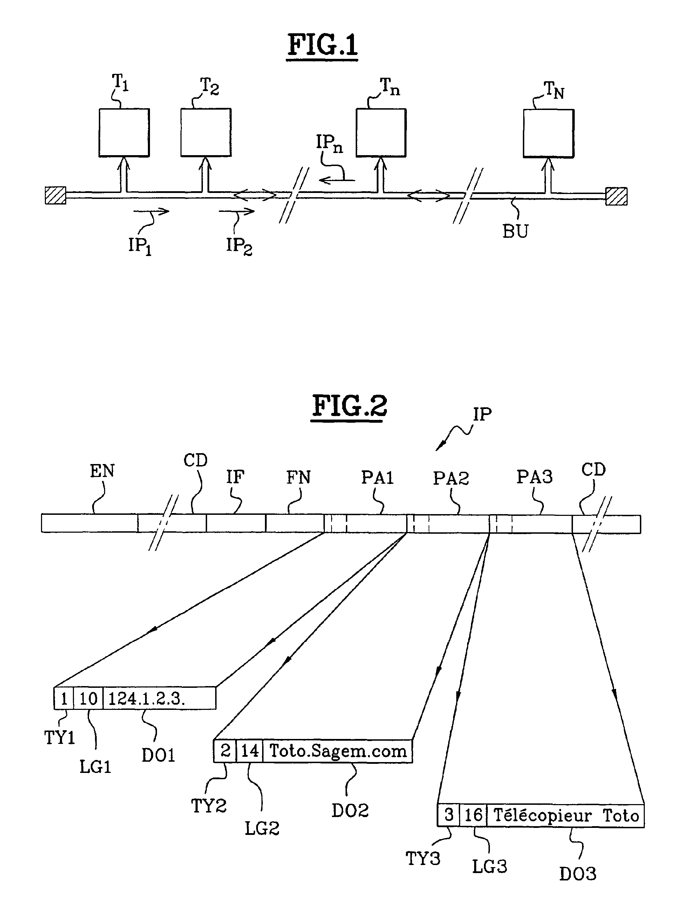

On se réfère à titre d'exemple à un réseau local ayant une topologie en bus BU et à accès multiple de type CSMA/CD (Carrier Sense Multiple Access/Collision Detect). Selon la figure 1, le réseau comprend N terminaux T₁ à T_{N} reliés au bus BU. Dans un tel réseau, un terminal peut émettre une trame s'il ne détecte pas de trame dans le bus BU. La réalisation préférée à laquelle on se référera dans la suite concerne un réseau Ethernet dans lequel les trames encapsulent des paquets IP selon les protocoles TCP/IP. Dans la figure 1, on n'a pas représenté d'autres machines connectées au bus BU, telles que par exemple une passerelle entre le réseau local et le réseau téléphonique public constituant une plate-forme informatique privée du type commutateur PABX.

En référence à la figure 2, on retrouve la structure générale d'un paquet IP avec un en-tête normalisé EN et un champ de données CD. L'en-tête comprend notamment l'adresse d'émetteur du paquet lorsque celui-ci est diffusé, ou bien cette adresse ainsi qu'une adresse de récepteur et au moins l'adresse du port de source et l'adresse du port de destination en relation avec l'application de répertoire dans un terminal au niveau de la couche de transport TCP.

Selon l'invention, le champ de données CD comprend, entre autres, un champ d'identification IF, un champ de fonction FN et plusieurs champs de paramètre PA. Le champ d'identification IF contient plusieurs caractères qui identifient un groupe de terminaux ; par exemple, le groupe de terminaux T₁, T₂ et Tₙ, avec 1 ≤ n ≤ N, auxquels on se référera dans la suite parmi l'ensemble des terminaux T₁ à T_{N} du réseau, contient le même identifiant "télécopieur" afin que le champ de données CD d'un paquet contenant un tel identifiant ne soit traité que par les terminaux T₁, T₂ et Tₙ. Le champ de fonction FN contenant quelques bits indique une fonction à réaliser dans le terminal récepteur du paquet IP, comme par exemple une mise à jour de répertoire.
Chaque champ de paramètre PA est composé de trois sous-champs TY, LG et DO. Les champs TY et LG spécifient respectivement le type de données et la longueur des données contenues dans le sous-champ DO. Par exemple, trois champs de paramètre PA1, PA2 et PA3 sont inclus dans le champ de données CD du paquet IP. Le paramètre dans le champ PA1 est relatif à l'adresse IP du terminal émetteur du paquet IP, par exemple "124.1.2.3." contenu dans le sous-champ DO1, ayant une longueur de dix caractères indiquée dans le sous-champ LG1 et correspondant au type TY1 = 1. Le paramètre dans le champ PA2 est relatif à l'adresse de courrier électrique (e-mail) du terminal émetteur contenue dans le sous-champ D02, comme l'adresse "Toto.Sagem.com", ayant une longueur de quatorze caractères indiquée dans le sous-champ LG2 et correspondant au type TY2 = 2. Le paramètre dans le champ PA3 est relatif au nom de réseau, ou de préférence au nom usuel, du terminal émetteur contenu dans le sous-champ D03, comme par exemple "Télécopieur Toto", ayant une longueur de seize caractères indiquée dans le sous-champ LG3 et correspondant à un troisième type indiqué dans le sous-champ TY3 = 3.
Comme on le verra dans la suite, un tel paquet IPn est diffusé par le terminal Tₙ notamment lors de son installation dans le réseau, et de tels paquets IP₁ et IP₂ sont transmis en réponse respectivement par les terminaux T₁ et T₂ à destination du terminal Tₙ. Le paquet IPₙ est un paquet de diffusion qui n'est destiné qu'aux autres terminaux T₁, T₂ du même groupe caractérisé par un identifiant IF commun aux terminaux T₁, T₂ et Tₙ tandis que les paquets IP₁ et IP₂ ne sont destinés qu'au terminal Tₙ et par conséquent contiennent l'adresse de celui-ci en tant qu'adresse récepteur.

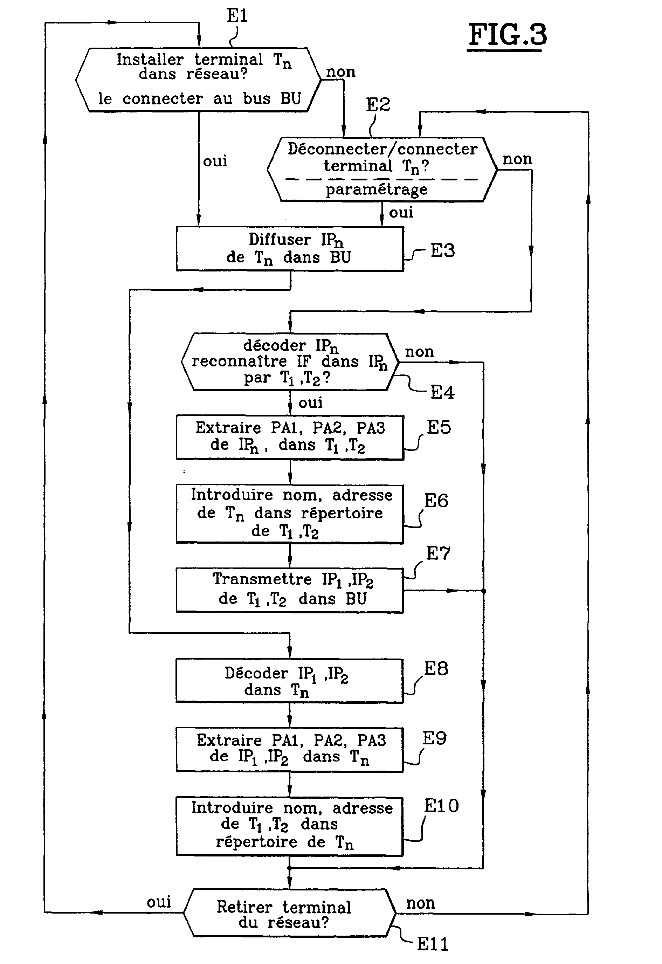

Le procédé de constitution de répertoires dans les terminaux T₁, T₂ et Tₙ montré à la figure 3 est déclenché par l'un des deux événements signalé aux étapes E1 et E2.
A l'étape E1, il est supposé que le terminal Tₙ est inséré dans le réseau en l'installant puis en le connectant au bus BU. Le contenu des champs IF, FN et PA1 à PA3 relatif au terminal Tₙ, en tant que terminal émetteur, peut être déterminé au moins en partie par le constructeur du terminal et/ou au moins en partie par l'usager du terminal.
Pour l'étape E2, il est supposé que l'un des paramètres PA1 à PA3 relatifs au terminal Tₙ déjà installé a été modifié lors d'une connexion au réseau. Par exemple, le réseau comprend un serveur contenant le protocole DHCP (Dynamic Host Configuration Protocol) pour attribuer dynamiquement des adresses IP aux terminaux T₁ à T_{N} du réseau, ou plus généralement pour attribuer dynamiquement au moins l'un des paramètres PA1 à PA3 relatifs au terminal Tₙ lorsque celui-ci est connecté pour la première fois au réseau, comme à l'étape E1, ou bien plus généralement, lorsque celui-ci se connecte au réseau chaque fois qu'il est mis en marche. Ainsi le serveur configure automatiquement le terminal Tₙ en lui allouant dynamiquement une adresse IP à l'étape E2.
Après l'étape E1 ou E2, le procédé de constitution de répertoires comprend les étapes principales successives E3 à E11, les étapes E3 et E8 à E11 étant mises en oeuvre dans le terminal appelant Tₙ, et les étapes E4 à E7 et E11 étant mises en oeuvre dans chacun des terminaux appelés T₁ et T₂.
Après l'étape E1 ou E2, suite à la connexion du terminal Tₙ au bus BU du réseau, le terminal Tₙ diffuse dans le bus BU le paquet IPₙ contenant notamment des paramètres PA1, PA2 et PA3 qui lui sont propres à l'étape E3. En particulier, le paquet IPₙ contient l'identifiant IF commun à tous les terminaux T₁, T₂ et Tₙ du groupe de "télécopieurs" se trouvant dans le réseau.
Tous les terminaux dans le réseau rejettent le paquet IPₙ à l'exception des terminaux T₁ et T₂ qui reconnaissent l'identifiant IF propre à leur groupe. Chaque terminal T₁, T₂ effectue alors les étapes E4 à E7.
Le paquet IPₙ est décodé dans le récepteur du terminal T₁, T₂ (étape E4) qui reconnaît l'identifiant de groupe IF. Au niveau du service applicatif désigné par le port de destination dans le champ FN du paquet IPₙ et relatif à la mise à jour de répertoires, le terminal T₁, T₂ extrait les champs de paramètres PA1 à PA3 du paquet IPₙ (étape E5). Le répertoire dans le terminal T₁, T₂ est alors mis à jour (étape E6), notamment en entrant comme nouveau nom usuel le nom du terminal Tn contenu dans le sous-champ D03 extrait du paquet IPₙ ainsi que les paramètres dans les autres sous-champs DO1 et DO2 extraits du paquet IPₙ permettant de joindre le terminal Tₙ depuis le terminal T₁, T₂. Si, en harmonie avec l'étape E2, le terminal Tₙ est déjà répertorié dans le terminal T₁, T₂, le ou les paramètres contenus dans le champ de données du paquet IPₙ remplacent respectivement le ou les paramètres déjà mémorisés dans le répertoire du terminal.
Après cette mise à jour de répertoire, le terminal T₁, T₂ transmet un paquet IP₁, IP₂ contenant classiquement son adresse en tant qu'adresse d'émetteur, l'adresse du terminal Tₙ en tant qu'adresse de récepteur grâce à l'adresse IP contenue dans le sous-champ DO1 du paquet IPₙ qui vient d'être reçu, ainsi que des paramètres PA1 à PA3 permettant au terminal Tₙ d'appeler ultérieurement le terminal T₁, T₂ (étape E7).
En revenant au terminal Tₙ, celui-ci effectue des étapes E8, E9 et E10, respectivement analogues aux étapes E4, E5 et E6, en réponse à chaque paquet IP₁, IP₂. Le paquet IP₁, IP₂ est reconnu seulement par le terminal Tₙ puisque ce paquet contient l'adresse du terminal Tₙ, et le service applicatif relatif à la mise à jour de répertoires est activé suite respectivement à l'identifiant de groupe détecté dans le champ IF et à la fonction correspondante détectée dans le champ FN du paquet IP₁, IP₂ (étape E8). Les paramètres PA1, PA2 et PA3 sont extraits du paquet IP₁, IP₂ de manière à constituer le répertoire dans le terminal Tₙ, en faisant correspondre le nom du terminal T₁, T₂ dans le sous-champ D03 du paquet IP₁, IP₂ à l'adresse IP et à l'adresse de courrier électronique contenues dans les sous-champs DO1 et DO2 du paquet IP₁, IP₂ (étape E10). Le répertoire dans le terminal Tₙ est ainsi constitué automatiquement en réponse à tous les paquets IP₁, IP₂ des terminaux T₁, T₂ dans le groupe auquel appartient le terminal Tₙ.
Après l'étape E7 dans chaque terminal appelé T₁, T₂ ou après l'étape E10 dans le terminal initialement appelant Tₙ, le procédé de constitution de répertoires est réitéré (étape E11) si l'un des terminaux du groupe en question, en tant que terminal devenu Tₙ, est déconnecté du réseau, c'est-à-dire est arrêté, puis remis en fonctionnement (étape E2).
Ainsi, un usager arrivant sur le terminal Tₙ peut directement envoyer un message, par exemple une télécopie, à l'un des terminaux T₁, T₂ du groupe en utilisant le répertoire local dans le terminal Tₙ qui vient d'être constitué automatiquement, sans la moindre intervention de l'usager sur ce répertoire. De même, après l'installation ou la connexion du terminal Tₙ, un usager se présentant devant le terminal T₁, T₂ peut directement transmettre un message, par exemple une télécopie, au terminal Tₙ en utilisant le répertoire local inclus dans le terminal T₁, T₂ qui vient d'être mis à jour automatiquement, sans la moindre intervention sur ce répertoire.

L'invention n'est pas limitée à un réseau local de type Ethernet tel que décrit ci-dessus, mais est applicable à tout réseau local, quelle que soit son étendue, et donc à tout réseau local de type local LAN (Local Area Network) pouvant être installé au domicile d'un particulier ou dans une entreprise, ou de type métropolitain MAN (Metropolitan Area Network) installé dans un bâtiment ou entre plusieurs bâtiments dans une entreprise, et est applicable à tout réseau local quelles que soient son architecture et sa technologie et donc à tout réseau de type à simple ou double bus, en étoile, à câble, en anneau ou à fibres optiques, ou bien sans fil WLAN (Wireless LAN) ou HiperLAN (High Performance Radio LAN).

## Revendications

1. - Procédé pour constituer des répertoires dans des terminaux (T₁ à T_{N}) reliés par un réseau local (BU), **caractérisé en ce qu'**il comprend les étapes suivantes :
- diffuser (E3) un message (IPₙ) depuis un terminal donné (Tₙ) dans le réseau (BU), ledit message diffusé contenant au moins un nom (PA3) et une adresse (PA1, PA2) du terminal donné,
- dans au moins un autre terminal (T₁, T₂), décoder (E4) le message diffusé (IPₙ), y extraire (E5) le nom et l'adresse du terminal donné, introduire (E6) le nom et l'adresse extraits en correspondance dans un répertoire dudit autre terminal, et transmettre (E7) un message de réponse (IP₁, IP₂) contenant l'adresse dudit terminal donné en tant qu'adresse de récepteur, et au moins le nom et l'adresse dudit autre terminal extraits du message diffusé,
- décoder (E8) le message de réponse (IP₁, IP₂) dans le terminal donné (Tₙ), y extraire le nom et l'adresse dudit autre terminal, et introduire le nom et l'adresse extraits en correspondance dans un répertoire dudit terminal donné.

2. - Procédé conforme à la revendication 1, selon lequel le terminal donné (Tₙ) et plusieurs autres terminaux (T₁, T₂) dans le réseau (BU) définissent un groupe de terminaux associés à un identifiant, et le message diffusé (IPₙ) comprend ledit identifiant (IF) afin que seulement lesdits plusieurs autres terminaux décodent le message diffusé pour y extraire le nom et l'adresse du terminal donné.

3. - Procédé conforme à la revendication 1 ou 2, selon lequel le message diffusé (IPₙ) et le message de réponse (IP₁, IP₂) comprennent chacun un champ de fonction (FN) relatifs à la constitution de répertoire.

4. - Procédé conforme à l'une quelconque des revendications 1 à 3, selon lequel l'adresse contenue dans le message diffusé (IPₙ) ou dans le message de réponse (IP₁, IP₂) comprend une adresse de terminal émetteur (DO1) selon le protocole internet et/ou une adresse de courrier électronique de terminal émetteur (DO2).

5. - Procédé conforme à l'une quelconque des revendications 1 à 4, selon lequel l'étape de diffuser succède automatiquement à une connexion du terminal donné (Tₙ) au réseau (BU).

## Claims

1. A method of constructing directories in terminals (T₁ to T_{N}) connected by a local area network (BU), **characterized in that** it includes the following steps:
- broadcasting (E3) a message (IPₙ) from a given terminal (Tₙ) in the network (BU), said broadcast message containing at least a name (PA3) and an address (PA1, PA2) of the given terminal,
- in at least one other terminal (T₁, T₂), decoding (E4) the broadcast message (IPₙ), extracting (E5) from it the name and the address of the given terminal, inserting (E6) the extracted name and address in mapping relationship into a directory of said other terminal, and transmitting (E7) a response message (IP₁, IP₂) containing the address of said given terminal as a receiver address and at least the name and the address of said other terminal extracted from the broadcast message,
- decoding (E8) the response message (IP₁, IP₂) in the given terminal (Tₙ), extracting from it the name and the address of said other terminal, and inserting the extracted name and address in mapping relationship into a directory of said given terminal.

2. The method according to claim 1, wherein the given terminal (Tₙ) and plural other terminals (T₁, T₂) in the network (BU) define a group of terminals associated with an identifier, and the broadcast message (IPₙ) includes said identifier (IF) so that only said plural other terminals decode the broadcast message to extract from it the name and the address of the given terminal.

3. The method according to claim 1 or 2, wherein the broadcast message (IPₙ) and the response message (IP₁, IP₂) each include a function field (FN) relating to the directory construction.

4. The method according to any one of claims 1 to 3, wherein the address contained in the broadcast message (IPₙ) or in the response message (IP₁, IP₂) includes a address (DO1) of a sender terminal conforming to the internet protocol and/or an electronic mail address (DO2) of a sender terminal.

5. The method according to any one of claims 1 to 4, wherein the broadcasting step follows on automatically from the given terminal being connected (Tₙ) to the network (BU).

## Patentansprüche

1. - Verfahren zur Erstellung von Verzeichnissen in Endgeräten (T₁ bis Tₙ), die über ein lokales Netz (BU) miteinander verbunden sind, **dadurch gekennzeichnet, dass** es die folgenden Schritte umfasst:
- das Versenden (E3) einer Nachricht (IPₙ) von einem vorgegebenen Endgerät (Tₙ) aus innerhalb des Netzes (BU), wobei die versandte Nachricht zumindest einen Namen (PA3) und eine Adresse (PA1, PA2) des vorgegebenen Endgeräts beinhaltet ;
- das Dekodieren (E4), in mindestens einem anderen Endgerät (T₁, T₂), der versandten Nachricht (IPₙ), das Auslesen (E5) des Namens und der Adresse des vorgegebenen Endgeräts, das Ablegen des ausgelesenen Namens und der entsprechenden ausgelesenen Adresse in ein Verzeichnis des jeweiligen anderen Endgeräts und das Übermitteln (E7) einer Antwortnachricht (IP₁, IP₂), welche die Adresse des vorgegebenen Endgeräts als Empfängeradresse sowie mindestens den Namen und die Adresse des anderen Endgeräts enthält, die aus der gesendeten Nachricht ausgelesen wurden.
- das Dekodieren (E8) der Antwortnachricht (IP₁, IP₂) im vorgegebenen Endgerät (Tₙ), das Auslesen des Namens und der Adresse des jeweiligen anderen Endgeräts sowie das Ablegen des ausgelesenen Namens und der entsprechenden ausgelesenen Adresse in ein Verzeichnis des vorgegebenen Endgeräts.

2. - Verfahren nach Anspruch 1, bei dem das vorgegebene Endgerät (Tₙ) und diverse andere Endgeräte (T₁, T₂) innerhalb des Netzes (BU) eine Gruppe von Endgeräten bilden, die mit einer Kennung verknüpft sind, und bei dem die gesendete Nachricht (IPₙ) diese Kennung (IF) enthält, damit lediglich die diversen anderen Endgeräte die Nachricht dekodieren, um aus ihr Name und Adresse des vorgegebenen Endgeräts auszulesen.

3. - Verfahren nach Anspruch 1 oder 2, bei dem die gesendete Nachricht (IPₙ) und die Antwortnachricht (IP₁, IP₂) jeweils ein Funktionsfeld (FN) in Bezug auf die Erstellung des Verzeichnisses beinhalten.

4. - Verfahren nach einem beliebigen der Ansprüche 1 bis 3, bei dem die Adresse, die in der gesendeten Nachricht (IPₙ) oder in der Antwortnachricht (IP₁, IP₂) enthalten ist, eine IP-Adresse des Sende-Endgeräts (D01) und/oder eine E-Mail-Adresse des Sende-Endgeräts (D02) umfasst.

5. - Verfahren nach einem beliebigen der Ansprüche 1 bis 4, bei dem die Sendephase sich automatisch an eine Verbindung des jeweiligen Endgeräts (Tₙ) mit dem Netz (BU) anschließt.
